# EUROPEAN PATENT APPLICATION

(11) **EP 4 725 737 A1**
(43) Date of publication of application: **15.04.2026**
(21) Application number: 24822230.9
(22) Date of filing: 31.01.2024
(51) Int. Cl.: B60K 17/16, F16H 48/20

(54) **VEHICLE CONTROL METHOD, CONTROLLER, AND VEHICLE**

(30) Priority: 12.06.2023 CN 202310692700
(71) Applicant: BYD Company Limited, Shenzhen, Guangdong 518118 (CN)
(72) Inventor: YANG, Dongsheng, Shenzhen, Guangdong 518118 (CN); ZHU, Haibo, Shenzhen, Guangdong 518118 (CN); WANG, Kuncheng, Shenzhen, Guangdong 518118 (CN); TANG, Lizhong, Shenzhen, Guangdong 518118 (CN); ZHU, Futang, Shenzhen, Guangdong 518118 (CN)
(74) Representative: Mathys & Squire
(86) International application number: PCT/CN2024/074964
(87) International publication number: WO 2024/255269

(57) **Abstract**

A vehicle control method, a controller, and a vehicle. The control method comprises: when a locking instruction is received, first controlling a wheel-end decoupler of a differential of a vehicle to execute a coupling operation, and then controlling a differential lock of the differential to execute a locking operation. In this way, when a differential lock performs locking, a wheel-end decoupler has performed coupling in advance, such that the problem of a locking failure caused by executing a locking operation when a wheel end is in an uncoupled state is avoided.

## Description

### CROSS-REFERENCE TO RELATED APPLICATIONS

The present disclosure claims priority to Chinese Patent Application No. 202310692700.0 filed on June 12, 2023, titled "VEHICLE CONTROL METHOD, CONTROLLER, AND VEHICLE", which is incorporated herein by reference in its entirety.

### FIELD

This application belongs to the technical field of vehicle power systems, and relates to a vehicle control method, a controller and a vehicle.

### BACKGROUND

In the related art, a differential equipped with an electronic differential lock can realize the functions of differential rotation at the wheel ends and synchronous rotation at the wheel ends by controlling the disconnection and engagement of the locking mechanism, so as to meet the requirements of different vehicle driving conditions. Therefore, avoiding locking failure of the differential is a technical problem that needs to be solved urgently at present.

### SUMMARY

This application provides a vehicle control method, a controller and a vehicle to solve the problem of locking failure caused by execution of the locking operation when the wheel ends are in an uncoupled state in the prior art.

To solve the above technical problems, on one hand, an embodiment of this application provides a vehicle control method, including:
Upon receiving a locking command, first control the wheel-end decoupler of the vehicle's differential to perform a coupling operation, and then control the differential lock of the differential to perform a locking operation.

Optionally, the step of first controlling the wheel-end decoupler of the vehicle's differential to perform a coupling operation and then controlling the differential lock of the differential to perform a locking operation includes:
when the vehicle meets a locking enable condition, control the differential lock to perform the locking operation, where the locking enable condition includes: the vehicle speed is less than the first target vehicle speed;
when the vehicle meets a forced coupling condition, control the wheel-end decoupler to perform the coupling operation, wherein the forced coupling condition includes: the vehicle speed is less than the second target vehicle speed.

Especially, the first target vehicle speed is less than the second target vehicle speed.

Optionally, the range of the first target vehicle speed is: (0, 5) km/h.

Optionally, the range of the second target vehicle speed is: [5, 10) km/h.

Optionally, when the vehicle meets an unlocking enable condition, the differential lock is allowed to perform the unlocking operation, wherein the unlocking enable condition includes: the vehicle speed is greater than the third target vehicle speed, and the third target vehicle speed > the second target vehicle speed.

Optionally, the range of the third target vehicle speed is: (30, 50) km/h.

Optionally, the vehicle is a four-wheel drive vehicle, and the differential is the differential of the auxiliary drive of the four-wheel drive vehicle.

Optionally, the method further includes:
when the vehicle meets the locking enable condition, the differential lock is allowed to perform the locking operation, wherein the locking enable condition includes: the vehicle speed is less than the first target vehicle speed, the speed difference between the connecting shafts at both ends of the wheel-end decoupler is less than the first target speed difference, and the output torque of the vehicle is less than the first target torque;
when the vehicle meets the coupling enable condition, the wheel-end decoupler is allowed to perform the coupling operation, wherein the coupling enable condition includes: the speed difference between the connecting shafts at both ends of the wheel-end decoupler is less than the second target speed difference, and the output torque of the auxiliary drive is less than the first target torque, among which the second target speed difference is less than the first target speed difference.

Optionally, the range of the first target speed difference is: (30, 100) rpm.

Optionally, the range of the second target speed difference is: (0, 30] rpm.

Optionally, when the auxiliary drive meets the forced coupling condition, control the wheel-end decoupler of the auxiliary drive to perform the coupling operation, wherein the forced coupling condition includes: the speed of the four-wheel drive vehicle is greater than the fourth target vehicle speed, and the fourth target vehicle speed is greater than the third target vehicle speed.

Optionally, the range of the fourth target vehicle speed is: (120, maximum allowable vehicle speed) km/h.

According to the vehicle control method of the embodiment of this application, upon receiving a locking command, the wheel-end decoupler of the vehicle's differential is first controlled to perform a coupling operation, and then the differential lock of the differential is controlled to perform a locking operation. In this way, when the differential lock is locked, the wheel-end decoupler has been coupled in advance. This avoids locking failure caused by executing the locking operation when the wheel ends are uncoupled, which occurs in the related art, and ensures the normal realization of the differential lock function.

On the other hand, an embodiment of this application provides a controller, which operates according to the above-mentioned control method.

On a further hand, an embodiment of this application provides a vehicle, including the above-mentioned controller.

### BRIEF DESCRIPTION OF THE DRAWINGS

FIG. 1 is a block diagram of a differential control method provided by an embodiment of this application;
FIG. 2 is a schematic diagram of a power assembly of a vehicle provided by an embodiment of this application;
FIG. 3 is a schematic diagram of a differential of a vehicle power system provided by an embodiment of this application.

The reference signs in the specification are as follows:
10, differential;
1, differential body; 11, housing; 12, planetary gear; 13, planetary gear shaft; 14, first side gear; 15, second side gear; 2, differential lock; 3, wheel-end decoupler;
20, drive motor; 30, first half-shaft; 40, first wheel; 50, second half-shaft; 60, second wheel; 70, reduction mechanism; 701, primary reduction driving gear; 702, primary reduction driven gear; 703, secondary reduction driving gear; 704, secondary reduction driven gear; 80, controller.

### DETAILED DESCRIPTION

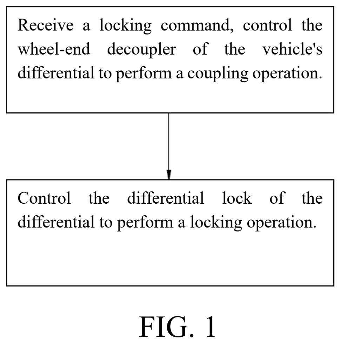

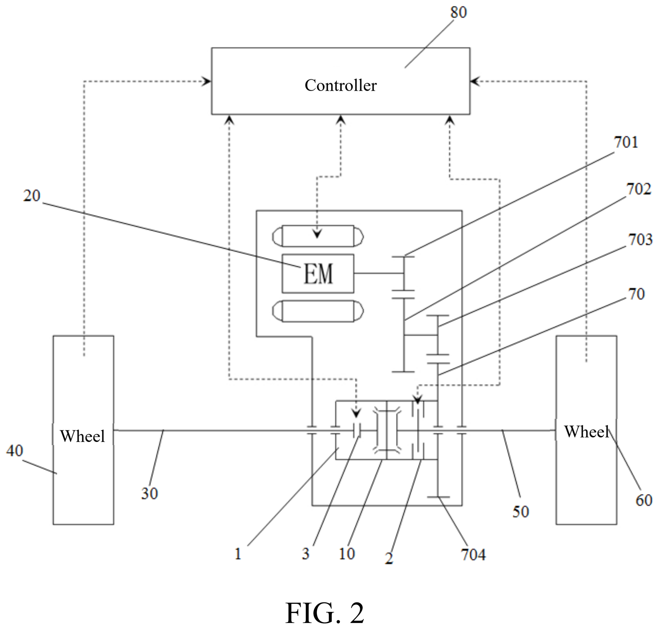

To make the technical problems solved by this application, the technical solutions and the beneficial effects more clear, the following further describes this application in detail with reference to the accompanying drawings and embodiments. It will be understood that the specific embodiments described herein are only used to explain this application and are not used to limit this application. In Fig. 1, the direction perpendicular to the paper surface is the Y-axis direction, and the X-axis direction and Z-axis direction refer to the coordinates in Fig. 2.

Referring to Fig. 1, the vehicle control method provided by the embodiment of this application includes:
upon receiving a locking command, first control the wheel-end decoupler of the vehicle's differential to perform a coupling operation, and then control the differential lock of the differential to perform a locking operation.

According to the vehicle control method of the embodiment of this application, upon receiving a locking command, the wheel-end decoupler of the vehicle's differential is first controlled to perform a coupling operation, and then the differential lock of the differential is controlled to perform a locking operation. In this way, when the differential lock is locked, the wheel-end decoupler has been coupled in advance. This avoids locking failure caused by executing the locking operation when the wheel ends are uncoupled, which occurs in the related art, and ensures the normal realization of the differential lock function.

In one embodiment, the step of first controlling the wheel-end decoupler of the vehicle's differential to perform a coupling operation and then controlling the differential lock of the differential to perform a locking operation includes:
when the vehicle meets a locking enable condition, control the differential lock to perform the locking operation, wherein the locking enable condition includes: the vehicle speed is less than the first target vehicle speed;
when the vehicle meets a forced coupling condition, control the wheel-end decoupler to perform the coupling operation, wherein the forced coupling condition includes: the vehicle speed is less than the second target vehicle speed.

Especially, the first target vehicle speed is less than the second target vehicle speed.

In one embodiment, the range of the first target vehicle speed is: (0, 5) km/h.

In one embodiment, the range of the second target vehicle speed is: [5, 10) km/h.

Through autonomous vehicle speed control: first control the wheel-end decoupler of the auxiliary drive of the differential of the four-wheel drive vehicle to perform a coupling operation, and then control the differential lock of the auxiliary drive of the differential to perform a locking operation.

In one embodiment, when the vehicle meets an unlocking enable condition, the differential lock is allowed to perform the unlocking operation, wherein the unlocking enable condition includes: the vehicle speed is greater than the third target vehicle speed, and the third target vehicle speed > the second target vehicle speed.

In the locked state, it will unlock automatically when the unlocking enable condition is met. For example, after getting out of trouble, the auxiliary drive automatically switches to the unlocked state.

In one embodiment, the range of the third target vehicle speed is: (30, 50) km/h.

In one embodiment, the vehicle is a four-wheel drive vehicle. The four-wheel drive vehicle has a main drive and an auxiliary drive, and the differential is the differential of the auxiliary drive of the four-wheel drive vehicle. Both the main drive and the auxiliary drive have their own drive motors and differentials. The differential includes a differential body (traditional differential), a differential lock and a wheel-end decoupler.

In one embodiment, the method further includes:
when the vehicle meets the locking enable condition, the differential lock is allowed to perform the locking operation, wherein the locking enable condition includes: the vehicle speed is less than the first target vehicle speed, the speed difference between the connecting shafts at both ends of the wheel-end decoupler is less than the first target speed difference, and the output torque of the vehicle is less than the first target torque. The locking enable condition includes that the output torque of the vehicle is less than the first target torque, which can ensure the smoothness when the differential lock is locked and the wheel-end decoupler is coupled.

The locking of the differential lock corresponds to the extreme conditions of the vehicle, such as slipping, off-road mode (bumpy sections), trouble-free mode, etc.

When the vehicle meets the coupling enable condition, the wheel-end decoupler is allowed to perform the coupling operation, wherein the coupling enable condition includes: the speed difference between the connecting shafts at both ends of the wheel-end decoupler is less than the second target speed difference, and the output torque of the auxiliary drive is less than the first target torque. Especially, the second target speed difference is less than the first target speed difference.

For the coupling of the wheel-end decoupler, when the vehicle switches from two-wheel drive to four-wheel drive, the smaller the speed difference between the connecting shafts at both ends of the wheel-end decoupler, the better the smoothness.

The operating condition of the differential lock is when a speed difference occurs between the left and right wheels due to wheel slip. The operating condition of the wheel-end decoupler is to cut off the drag torque of the auxiliary drive in two-wheel drive mode; the speed difference it controls refers to the speed difference between the connecting shafts at both ends of the wheel-end decoupler.

In one embodiment, the range of the first target speed difference is: (30, 100) rpm.

In one embodiment, the range of the second target speed difference is: (0, 30] rpm.

In one embodiment, when the auxiliary drive meets the forced coupling condition, the wheel-end decoupler of the auxiliary drive is controlled to perform a coupling operation. The forced coupling condition includes: the speed of the four-wheel drive vehicle is greater than the fourth target vehicle speed, wherein the fourth target vehicle speed is greater than the third target vehicle speed.

When the vehicle is traveling at high speed, the wheel-end decoupler needs to be coupled regardless of whether the drive motor of the auxiliary drive is operating, so as to avoid damage to the differential.

In one embodiment, the range of the fourth target vehicle speed is: (120, maximum allowable vehicle speed) km/h. The maximum allowable vehicle speed is the maximum speed specified by regulations. The setting of the fourth target vehicle speed can ensure the reliability of the differential and the stability of the vehicle at high speeds.

In one embodiment, the control method further includes:
detecting the vehicle speed; for example, detected by a vehicle speed sensor.

Detecting the output torque of the vehicle.

In addition, an embodiment of the present application provides a controller 10, which operates according to the control method of the above embodiment.

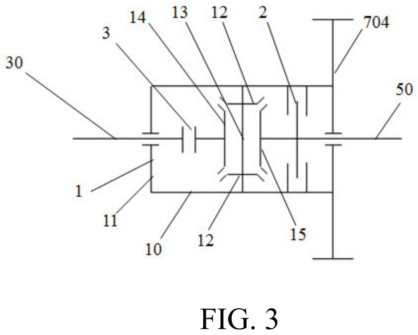

In addition, referring to FIG. 2 and FIG. 3, an embodiment of the present application provides a vehicle, including a powertrain and a controller 80. The powertrain includes a main drive and an auxiliary drive. Both the main drive and the auxiliary drive include their respective drive motors 20 and differentials 10. The differential 10 includes a differential body 1, a differential lock 2, and a wheel-end decoupler 3.

The differential lock 2 is used for locking and unlocking the differential; the wheel-end decoupler 3 is connected between one of the side gears of the differential body 1 and the half-shaft on the same side, and is used for coupling and decoupling the differential body 1 with the wheel connected to this half-shaft.

Specifically, referring to Fig. 3, the differential body 1 includes a housing 11, planetary gears 12, a planetary gear shaft 13, a first side gear 14, and a second side gear 15. Both ends of the planetary gear shaft 13 are connected to the housing 11, and planetary gears 12 are mounted on both ends. The planetary gears 12, the first side gear 14, and the second side gear 15 are all bevel gears. The planetary gears 12 are orthogonally meshed with the first side gear 14, and the planetary gears 12 are orthogonally meshed with the second side gear 15. The wheel-end decoupler 3 is connected between the first side gear 14 and the inner end of the first half-shaft 30. The outer end of the first half-shaft 30 is connected to the first wheel 40, and the second side gear 15 is connected to the second wheel 60 through the second half-shaft 50. The first side gear 14, the second side gear 15, the first half-shaft 30, and the second half-shaft 50 are coaxial. The differential lock 2 is connected between the housing 11 and the second half-shaft 50.

The connecting shafts at both ends of the wheel-end decoupler 3 are the first half-shaft 30 and the output shaft of the first side gear 14 respectively.

One of the first wheel 40 and the second wheel 60 is the left wheel, and the other is the right wheel.

The differential lock 2 is an electronic differential lock, such as an electromagnetic clutch. The wheel-end decoupler 3 is, for example, an electromagnetic clutch.

Referring to FIG. 2, the controller 80 is in signal connection with the differential lock 2, the wheel-end decoupler 3, and the drive motor 20 respectively, so as to control the locking and unlocking of the differential lock 2, the coupling and decoupling of the wheel-end decoupler 3, and the operation of the drive motor 20.

The differential in the related art does not have a wheel-end decoupling function. If it is necessary to reduce the drag torque of the drive motor to achieve energy saving and consumption reduction, the vehicle power system needs to be equipped with a separate wheel-end decoupler. This results in the differential in the related art having the disadvantages of large layout space occupation, low integration, and single function. In an embodiment of the present invention, referring to FIG. 3, the differential lock 2 and the wheel-end decoupler 3 are integrated into the differential body 1. That is, the differential body 1, the differential lock 2, and the wheel-end decoupler 3 are integrated into the same housing 11 to form an integrated differential 10, which has the advantages of small layout space occupation, high integration, and diversified functions.

In addition, referring to FIG. 2, the vehicle further includes a reduction mechanism 70, which is connected between the drive motor 20 and the housing 11 of the differential 1. The reduction mechanism 70 may be a single-speed or multi-speed reduction mechanism.

For example, in the embodiment shown in FIG. 2, the reduction mechanism 70 is a two-speed parallel-shaft gear reduction mechanism. Specifically, the reduction mechanism 70 includes a primary reduction driving gear 701, a primary reduction driven gear 702, a secondary reduction driving gear 703, and a secondary reduction driven gear 704. The primary reduction driving gear 701 is connected to the output shaft of the drive motor 20. The primary reduction driven gear 702 is coaxially connected to the secondary reduction driving gear 703. The secondary reduction driven gear 704 is fixed on the outer periphery of the housing 11 of the differential 1. The primary reduction driving gear 701 is meshed with the primary reduction driven gear 702, and the secondary reduction driving gear 703 is meshed with the secondary reduction driven gear 704.

The vehicle has a normal mode, a trouble-free mode, and an energy-saving mode. Under each mode, the control of the drive motor 20, the differential lock 2, and the wheel-end decoupler 3 is as shown in Table 1 below:

**Table 1**

| Working Mode | Control | | |
|---|---|---|---|
| | Drive Motor | Differential Lock | Wheel-End Decoupler |
| Normal Mode | Operating | Disconnected (Unlocked) | Engaged (Coupled) |
| Trouble-Free Mode | Operating | Locked | Engaged (Coupled) |
| Energy-Saving Mode | Not Operating | Disconnected (Unlocked) | Disconnected (Decoupled) |

In the normal mode, the wheel-end decoupler 3 is engaged, the differential lock 2 is disconnected, and the torque of the drive motor 20 can finally be transmitted to the left and right wheels through the differential 1 and the left and right half-shafts normally. This enables the vehicle's conventional functions such as straight-line driving and differential driving during turning.

In the trouble-free mode, the wheel-end decoupler 3 is engaged, the differential lock 2 is locked, and the differential lock 2 rigidly connects the second side gear 15 to the housing 11 of the differential 1. This makes the left and right wheels rigidly connected and transmit the output torque of the drive motor 20 at the same speed, improving the vehicle's ability to get out of trouble.

In the energy-saving mode, the wheel-end decoupler 3 is disconnected, the differential lock 2 is disconnected, and the drive motor 20 does not operate. The wheel on the side of the wheel-end decoupler 3 (the first wheel 40) is disconnected from the differential 1 and cannot transmit power, while the wheel on the other side (the second wheel 60) drives the differential gears (the planetary gears 12, the first side gear 14, and the second side gear 15) to idle. The wheels cannot drive the housing 11 of the differential 1 to rotate, thus failing to drive the drive motor 20 to rotate. This realizes the decoupling between the wheels and the drive motor 20, eliminates the drag torque of the reduction mechanism 70 and the drive motor 20, thereby reducing the drag torque during vehicle travel and achieving the purpose of energy saving and consumption reduction.

In another embodiment not shown in the figures, it may also be that the differential lock 2 is integrated in the housing 11 of the differential 1, and the wheel-end decoupler 3 is arranged outside the housing 11 of the differential 1.

In another embodiment not shown in the figures, it may also be that the wheel-end decoupler 3 is integrated in the housing 11 of the differential 1, and the differential lock 2 is arranged outside the housing 11 of the differential 1.

In another embodiment not shown in the figures, it may also be that both the differential lock 2 and the wheel-end decoupler 3 are arranged outside the housing 11 of the differential 1.

The above are only the preferred embodiments of the present application and are not intended to limit the present application. Any modifications, equivalent substitutions and improvements made within the spirit and principles of the present application shall be included in the protection scope of the present application.

## Claims

1. A control method for a vehicle, comprising:
when a locking instruction is received, first controlling a wheel-end decoupler of a differential of the vehicle to perform a coupling operation, and then controlling a differential lock of the differential to perform a locking operation.

2. The control method according to claim 1, wherein
a step of first controlling the wheel-end decoupler of the differential of the vehicle to perform the coupling operation and then controlling the differential lock of the differential to perform the locking operation comprises:
controlling the differential lock to perform the locking operation when the vehicle meets a locking enable condition, wherein the locking enable condition comprises: the vehicle speed of the vehicle is less than a first target vehicle speed;
controlling the wheel-end decoupler to perform the coupling operation when the vehicle meets a forced coupling condition, wherein the forced coupling condition comprises: the vehicle speed of the vehicle is less than a second target vehicle speed; wherein the first target vehicle speed is less than the second target vehicle speed.

3. The control method according to claim 2, wherein the range of the first target vehicle speed is: (0, 5) km/h.

4. The control method according to claim 2, wherein the range of the second target vehicle speed is: [5, 10) km/h.

5. The control method according to claim 2, wherein it further comprises:
allowing the differential lock to perform an unlocking operation when the vehicle meets an unlocking enable condition, wherein the unlocking enable condition comprises: the vehicle speed of the vehicle is greater than a third target vehicle speed, and the third target vehicle speed is greater than the second target vehicle speed.

6. The control method according to claim 5, wherein the range of the third target vehicle speed is: (30, 50) km/h.

7. The control method according to any one of claims 1-6, wherein the vehicle is a four-wheel drive vehicle, and the differential is a differential of an auxiliary drive of the four-wheel drive vehicle.

8. The control method according to claim 7, wherein it further comprises:
allowing the differential lock to perform the locking operation when the vehicle meets the locking enable condition, wherein the locking enable condition comprises: the vehicle speed of the vehicle is less than the first target vehicle speed, a speed difference between connecting shafts at both ends of the wheel-end decoupler is less than a first target speed difference, and an output torque of the vehicle is less than a first target torque;
allowing the wheel-end decoupler to perform the coupling operation when the vehicle meets a coupling enable condition, wherein the coupling enable condition comprises: the speed difference between the connecting shafts at both ends of the wheel-end decoupler is less than a second target speed difference, and an output torque of the auxiliary drive is less than the first target torque, wherein the second target speed difference is less than the first target speed difference.

9. The control method according to claim 8, wherein the range of the first target speed difference is: (30, 100) rpm.

10. The control method according to claim 8, wherein the range of the second target speed difference is: (0, 30] rpm.

11. The control method according to claim 8, wherein it further comprises:
controlling the wheel-end decoupler of the auxiliary drive to perform the coupling operation when the auxiliary drive meets the forced coupling condition, wherein the forced coupling condition comprises: the vehicle speed of the four-wheel drive vehicle is greater than a fourth target vehicle speed, and the fourth target vehicle speed is greater than the third target vehicle speed.

12. The control method according to claim 11, wherein the range of the fourth target vehicle speed is: (120, maximum allowable vehicle speed) km/h.

13. A controller, the controller operating according to the control method according to any one of claims 1 to 12.

14. A vehicle, comprising the controller according to claim 13.
